# EUROPÄISCHE PATENTANMELDUNG

(11) **EP 2 455 212 A2**
(43) Veröffentlichungstag der Anmeldung: **23.05.2012**
(21) Anmeldenummer: 11008580.0
(22) Anmeldetag: 26.10.2011
(51) Int. Cl.: B29C 69/00, B29C 49/00, B29C 51/08, B29C 51/10

(54) **Formvorrichtung und Verfahren zur Herstellung eines hohlen Kunststofffomteils**

(30) Priorität: 18.11.2010 DE 102010051542
(71) Anmelder: Linbrunner Alois Handel- und Kunststoffbearbeitung (Einzelunternehmen), 84152 Mengkofen/Hofdorf (DE)
(72) Erfinder: Linbrunner, Alois, 84152 Mengkofen / Holdorf (DE)
(74) Vertreter: advotec.

(57) **Zusammenfassung**

Es wird eine Formvorrichtung zur Herstellung eines hohlen Kunststoffiormteils aus mindestens einem Thermoplastzuschnitt (14, 18) nach einem Vakuumverform-, Blasform- oder Thermoformprozess vorgeschlagen, umfassend:
- eine erste Verformeinheit (12);
- eine zweite Verformeinheit (16), die gegenüberliegend der ersten Verformeinheit (12) angeordnet ist und zusammen mit der ersten Verformeinheit (12) zum Formen des mindestens einen Thermoplastzuschnitts zu dem hohlen Kunststoffformteil dient;
- eine Verfahreinrichtung, um die erste Verformeinheit (12) und die zweite Verfonneinheit (16) relativ zueinander zu verfahren;
- einen Manipulator (34), der in einen Zwischenraum zwischen der ersten Verfonneinheit (12) und der zweiten Verformeinheit (16) einfahrbar ist und mindestens ein Hilfswerkzeug (36, 40) zum Abstützen und/oder Verformen des Thermoplastauschnitts (14, 18) oder eines aus dem Thermoplastzuschnitt (14, 18) mittels einer der verformeinheiten (12, 16) hergestellten Verformlings umfasst.

## Beschreibung

Die Erfindung betrifft eine Formvorrichtung zur Herstellung eines hohlen Kunststoffformteils nach dem Oberbegriff des Patentanspruchs 1 sowie ein Verfahren zur Herstellung eines hohlen Kunststoffformteils.

Eine Formvorrichtung der einleitend genannten Art ist aus der Druckschrift EP 1 619 006 A2 bekannt und dient zur Herstellung eines Hohlkörpers aus zwei Thermoplastzuschnitten, der ein Einsatzteil enthält, welches in dem von dem Hohlkörper gebildeten Hohlraum angeordnet ist. Mittels der bekannten Vorrichtung kann nach einem Vakuumverformprozess bzw. Thennotbrmprozess, der als so genanntes Twin-Sheet-Verfahren bekannt ist, der Hohlkörper aus zwei Thermoplastzuschnitten geformt werden. Hierbei werden die beiden Thermoplastzuschnitte erwärmt, vakuumverformt und anschließend zur Ausbildung des Hohlkörpers miteinander verschweißt. Die Vorrichtung umfasst eine erste Verformeinheit, mittels der aus einem der Thermoplastzuschnitte ein erstes Foniiteitelement des Hohlkörpers herstellbar ist, sowie eine zweite Verformeinheit, mittels der aus dem anderen Thermoplastzuschnitt ein zweites Formteilelement des Hohlkörpers herstellbar ist. Nach der Herstellung der beiden Formteilelemente kann in das untere Formteilelement ein Einsatzteil eingelegt werden. Anschließend werden die zur Herstellung der beiden Formteilelemente genutzten Formwerkzeuge gegeneinander verfahren, so dass die beiden Farmteilelemente miteinander verfügt werden und der Hohlkörper mit dem darin angeordneten Einsatzteil gebildet wird. Dieser kann dann entformt werden.

Bei der Herstellung der Formteilelemente kann insbesondere bei großformatigen Thermoplastzuschnitten geringer Dicke das Problem auftreten, dass sich der betreffende Thermoplastzuschnitt aufgrund seines Eigengewichts bei seiner Anordnung in der oberen Verformeinheit durchbiegt und von seiner in den Randbereichen angeordneten Lagerung rutscht. Des Weiteren kann es insbesondere bei komplexen Formgebungen, die mittels der Verformeinheiten bzw. den Formwerkzeuge der Verformeinheiten zu einer unerwünschten Faltenbildung und sonstigen nicht gewünschten Unregelmäßigkeiten an den Formteilelementen bzw. Verformungen kommen.

Der Erfindung liegt die Aufgabe zugrunde, ausgehend von der einleitend genannten Gattung eine Formvorrichtung zu schaffen, die einerseits eine sichere Lagerung von Thennoplastzuschnitten in der Formvorrichtung ermöglicht und mit der andererseits eine optimierte Formgebung hinsichtlich der resultierenden Formteilelemente möglich ist.

Diese Aufgabe ist erfindungsgemäß durch die Formvorrichtung mit den Merkmalen des Patentanspruchs 1 gelöst.

Erfindungsgemäß wird also eine Formvorrichtung zur Herstellung eines hohlen Kunststotfformteils aus mindestens einem Thermoplastzuschnitt nach einem Vakuumverform-, Blasform- oder Thennofonuprozess vorgeschlagen, die eine erste Verformeinheit und eine zweite Verformeinheit, die gegenüberliegend der ersten Verformeinheit angeordnet ist und zusammen mit der ersten Verfbrmeinheit zum Formen des mindestens einen Thermoplastzuschnitts zu einem hohlen Kunststoffformteil dient, sowie eine Verfahreinrichtung umfasst, um die erste Verformeinheit und die zweite Verformeinheit relativ zueinander zu verfahren. Des Weiteren umfasst die Fonnvorrichtung nach der Erfindung einen Manipulator, der in einen Zwischenraum zwischen der ersten Verformeinheit und der zweiten Verformeinheit einfahrbar ist und aus diesem Zwischenraum ausfahrbar ist und der mindestens ein Hilfswerkzeug zum Abstützten und/oder Verformen des Thennoplastzuschnitts oder eines aus dem Thermoplastzuschnitt mittels einer der Verformeinheiten hergestellten Verformlings umfasst.

Der Kern der Erfindung besteht mithin darin, dass der mindestens eine Thermoplastzuschnitt oder auch der aus diesem gebildete Verformling von der Seite, die bei dem resultierenden hohlen Kunststofffonnteil innen liegt, durch das Hilfswerkzeug des Manipulators gestützt und/oder bearbeitet werden kann.

Mit der Formvorrichtung nach der Erfindung können insbesondere Doppelformteile, das heißt so genannte Twin-Sheet-Formteile hergestellt werden. Durch den Manipulator ist es möglich, mit der Formvorrichtung nach der Erfindung großformatige Twin-Sheet-Formteile mit geringer Wandstärke und auch mit komplexer Wandgwmetrie in hoher Güte herzustellen, da das Hilfswerkzeug den Fonngebungsprozess durch Druck von der Innenseite auf den betreffenden Thermoplastzuschnitt optimieren kann.

Doppelwandige Kunststoffformteile, die mit einer Vorrichtung nach der Erfindung herstellbar sind, können beliebige Hohlkörper sein, die zusätzlich ein innen liegendes Bauteil als Einsatzteil aufweisen können. Beispielsweise handelt es sich bei dem Kuiiststoffformteil um einen Kraftfahrzeugtank, der als Einsatzteil eine Baugruppe aufnimmt, die ein Schwimmersystem zur Ermittlung des Füllstandes darstellt. Denkbar ist es auch, dass das Einsatzteil ein geschäumtes Formelement ist, das mit der Formvorrichtung nach der Erfindung zwischen zwei Thermoplastschalen angeordnet wird. Auch kann das Einsatzteil ein Luftpolster oder ein loses Teil sein.

Grundsätzlich kann es sich bei der Fonnvorrichtung nach der Erfindung um eine Platten- oder Folienmaschine, mit der Platten- bzw. Folienzuschnitte umgeformt werden, oder auch um eine Strangmaschine, eine Blasformmaschine oder eine Sclilauch-Blasformmuschine handeln. Bei letzterer greift der Manipulator vorzugsweise von unten in das von dem Schlauch gebildete Halbzeug ein. Die Formvorrichtung nach der Erfindung kann also auch so ausgelegt sein, dass extrudierte Bahnen oder Schläuche als Thermoplastzuschnitt umgeformt werden können.

Insbesondere ist es auch denkbar, einen im Sinne der Erfindung ausgebildeten Manipulator bei existierenden Twin-Sheet-Maschinen oder Doppelfomianlagen nachzurüsten.

Grundsätzlich ist es des Weiteren möglich, die Formvorrichtung nach der Erfindung als geschlossenes System oder als offenes System auszulegen.

Bei einer bevorzugten Ausführungsform der Formvorrichtung nach der Erfindung umfasst das Hilfswerkzeug einen Verfomistempel. Der Verformstempel hat eine Geometrie, die der Geometrie der betreffenden Innenwandbereiche des resultierenden Kunststofllormteils entspricht. Er drückt von der Innenseite auf den Thermoplastzuschnitt bzw. den Verformling. Der Verformstempel kann zur Optimierung der Formgebung von der der Verformeinheit abgewandten Seite nachpressen oder auch bei der Formgebung mittels der Verformeinheit Formhilfe leisten. Auch kann der Verformstempel als so genannter Faltenschieber ausgebildet sein, der Falten des Verfonnlings ausstreicht, die beim Formen des Thermoplastzuschnitts zu dem Verformling entstanden sind. Der Verformstempel kann vor oder nach der Verformung des betreffenden Thermoptastzuschnitts mittels der betreffenden Verfonneinheit zur Anwendung kommen.

Bei einer speziellen Ausführungsform der Formvorrichtung nach der Erfindung umfasst das Hilfswerkzeug eine insbesondere plattenförmige Stützeinrichtung für den ein Halbzeug bildenden Thermoplastzuschnitt. Die plattenförmige Stützeinrichtung kann von unten an dem Thermoplastzuschnitt anliegen, so dass sich dieser nicht aufgrund seines Eigengewichts durchbiegt und dadurch von seiner in den Randbereichen angeordneten Lagerung rutscht. Die Stützeinrichtung wird zweckmäßigerweise so genutzt, dass sie nach der Fixierung bzw. dem Einspannen des betreffenden Thermoplastzuschnitts in der Formvorrichtung wieder aus dem Zwischenraum zwischen den beiden Verformeinheiten gefahren wird.

Insbesondere weist der Manipulator eine Antriebseinrichtung auf, deren Betätigung ein Verschwenken, ein translatorisches Verfahren und/oder ein Teleskopieren des Manipulators bewirkt. Durch die Antriebseinrichtung kann das Hilfswerkzeug des Manipulators an die gewünschte Stelle in dem Zwischenraum zwischen den beiden Verfonneinheiten gefahren werden, so dass es in entsprechend gewünschter Weise an dem Thermoplastzuschnitt angreift. Die Antriebseinrichtung ist vorzugsweise mit einer Steuereinrichtung verbunden, die hinsichtlich der Verfahrwege des Manipulators frei programmierbar ist.

Des Weiteren kann der Manipulator auch zum Einlegen eines Einsatzteils genutzt werden, so dass dieses in einen von dem umgeformten Thennoplastzuschnitt gebildeten

Hohlraum angeordnet ist. Nach dem Einlegen des Einsatzteils wird der .Manipulator wieder zurückgezogen bzw. aus dem Zwischenraum zwischen den Verfonncinheiten ausgefahren.

Bei einer bevorzugten Ausfiihrungsform der Formvorrichtung nach der Erfindung ist die erste Verformeinheit eine untere Verformeinheit zur Herstellung eines unteren Formteilelements aus einem unteren Thermoplastzuschnitt, die ein unteres Formwerkzeug, eine untere Heizeinrichtung und eine untere Halteeinrichtung für den unteren Thermoplastzuschnitt umfasst, und ist die zweite Verformeinheit eine obere Verformeinheit zur Herstellung eines oberen Fonnteilelements aus einem oberen Thermoplastzuschnitt, die oberhalb der unteren Verformeinheit angeordnet ist und ein oberes Formwerkzeug, eine obere Heizeinrichtung und eine obere Halteeinrichtung für den oberen Thermoplastzuschnitt umfasst. Ein derartiges Werkzeug entspricht einem Twin-Sheet-Werkzeug, mit dem Doppelformteile, das heißt Formteile aus zwei miteinander zu verbindenden Formteilelementen hergestellt werden k6nnen, in die gegebenenfalls Einsatzteile integriert sind.

Der Manipulator der Formvorrichtung nach der Erfindung ist insbesondere an einem Halterahmen gelagert, der zwischen der ersten Verformeinheit und der zweiten Verformeinheit angeordnet ist. In den Halterahmen ist auch vorzugsweise die Antriebscinrichtung für den Manipulator integriert. Der Manipulator kann dann in gewünschter Weise in den Zwischenraum zwischen den beiden Verfonneinheiten eingefahren werden und vor dem Zusammenfügen der aus den beiden Thermoplastzuschnitten gebildeten Verformlinge aus dem Zwischenraum ausgefahren und von dem Halterahmen aufgenommen werden. Der Halterahmen bzw. der Manipulator, der an dem Halterahmen gelagert ist, kann auch eine Einlegemechanik umfassen, die so konstruiert ist, dass sie nach dem Ablegen eines Einsatzteils aus einem Verfahrweg der gebildeten Formlinge bzw. Formteilelemente entfernt wird, um einen Doppelformprozess nicht zu verhindern. Vorzugsweise wird hierbei die Einlegemechanik bzw. der Manipulator vollständig von einem rahmenartigen Gehäuse des Halterahmens aufgenommen. Um eine in dem von dem Halterahmen begrenzten Raum der Formvorrichtung aufgestaute Wärme weiter für den Prozess nutzen zu können, wird während der Betätigung des Halterahmens zum Einlegen des Einsatzteils der Halterahmen geschlossen gehalten. Es liegt damit ein geschlossenes System vor.

Des Weiteren kann der Halterahmen einen Heizabschnitt umfassen, in dem ein Zwischenheizer für den oberen Thermoplastzuschnitt und/oder für den unteren Thermoplastzuschnitt angeordnet ist. Damit kann der mittels der Formvorrichtung durchgeführte Formprozess optimiert werden. Der Zwischenheizer wird vorzugsweise vor dem Ablegen eines Einsatzteils aus dem Zwischenraum zwischen der ersten Verformeinheit und der zweiten Verformeinheit ausgefahren.

Um eine hohe Variabilität hinsichtlich der Nutzung des Halterahmens und des Manipulators zu erzielen, ist es vorteilhaft, wenn der Halterahmen höhenverstellbar ist und/oder der Halterahmen parallel zu seiner Ebene verfahrbar ist.

Die Erfindung hat auch ein Verfahren zur Herstellung eines hohlen Kunststoffteils aus mindestens einem Thermoplastzuschnitt nach einem Vakuumverform-, Blasform- oder Thermoformprozess in einer Formvorrichtung zum Gegenstand, die eine erste Verformeinheit und eine zweite Verformeinheit umfasst. Dieses Verfahren zeichnet sich durch folgende Schritte aus:
- Beschicken der Formvorrichtung mit mindestens einem Thermoplastzuschnitt;
- Einfahren eines Manipulator in einen von dem mindestens einen Thermoplastzuschnitt gebildeten Zwischenraum, der zwischen den beiden Verformeinheiten liegt;
- Abstützen des Thermoplastzuschnitts mittels eines Hilfswerkzeugs des Manipulators und/oder Verformen des Thermoplastzuschnitts mittels eines Hilfswerkzeugs des Manipulators;
- Verformen des Thermoplastzuschnitts mittels der beiden Verformeinheiten,
- Ausfahren des Manipulators aus dem Zwischenraum; und
- Aneinanderfahren der beiden Verformeinheiten zur Ausformung des hohlen Kunststoffformteils.

Die vorstehend genannten Verfahrensschritte sind hinsichtlich ihrer Reihenfolge nicht festgelegt. So kann das Einfahren des Manipulators in den Zwischenraum vor dem Beschicken der Formvorrichtung mit dem Thermoplastzuschnitt erfolgen, so dass der Thermoplastzuschnitt nach dem Einbringen in die Formvorrichtung unmittelbar auf dem Hilfswerkzeug des Manipulators aufliegt. Auch kann das Einfahren des Manipulators nach dem Beschicken der Formvorrichtung mit dem Thermoplastzuschnitt erfolgen. Dann kann beispielsweise mittels des Hilfswerkzeugs eine Verformung des Thermoplastzuschnitts vor oder nach dessen Verformen mittels der Verformeinheiten erfolgen. Entsprechend kann das Ausfahren des Manipulators aus dem Zwischenraum auch zu einem Zeitpunkt erfolgen, der vor oder nach dem Verformen des Thermoplastzuschnitts mittels der beiden Verformeinheiten liegt. Es ist nur zwingend erforderlich, dass der Manipulator vor dem Aneinanderfahren der beiden Formeinheiten aus dem Zwischenraum gefahren wird, da er ansonsten den finalen Formprozessschritt stören würde.

Weitere Vorteile und vorteilhafte Ausgestaltungen des Gegenstandes der Erfindung sind der Beschreibung, der Zeichnung und den Patentansprüchen entnehmbar.

Ausführungsbeispiele einer Formvorrichtung nach der Erfindung sind in der Zeichnung schematisch vereinfacht dargestellt und werden in der nachfolgenden Beschreibung näher erläutert. Es zeigt:
- Fig. 1: einen stark schematisierten Aufbau einer Formvorrichtung nach der Erfindung;
- Fig. 2: eine vergrößerte Darstellung eines Ausschnitts der Formvorrichtung nach Fig. 1, in dem eine Einlegehilfe für einen oberen Thermoplastzuschnitt dargestellt ist;
- Fig. 3: ein als FormhiJfe dienendes Hilfswerkzeug der Formvorrichtung bei seiner Betätigung;

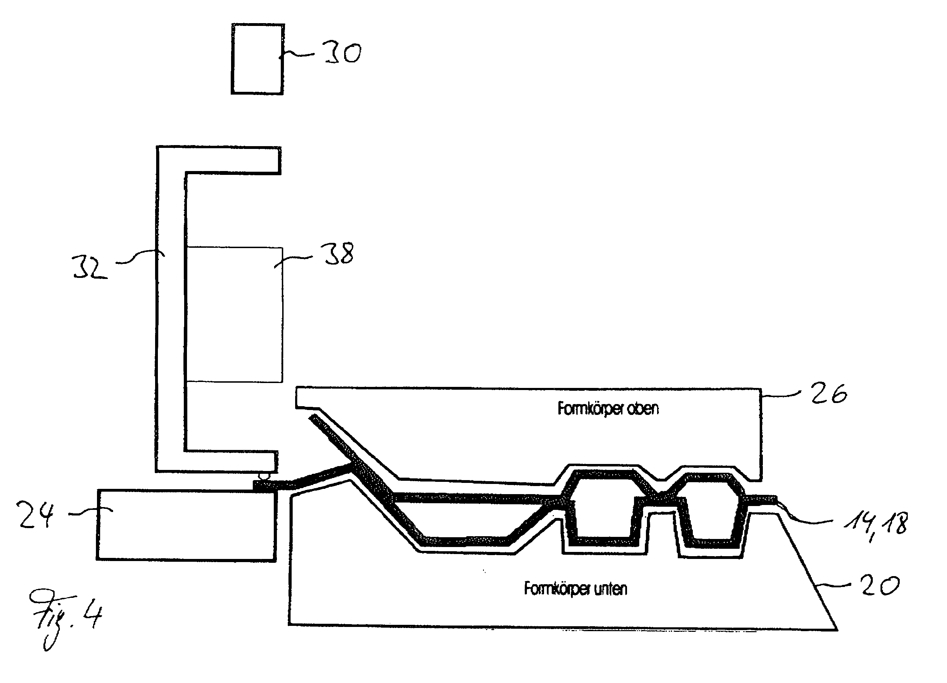

- Fig. 4: die Fonnvorrichtung mit aneinander gefahrenen Verformeinheiten; und

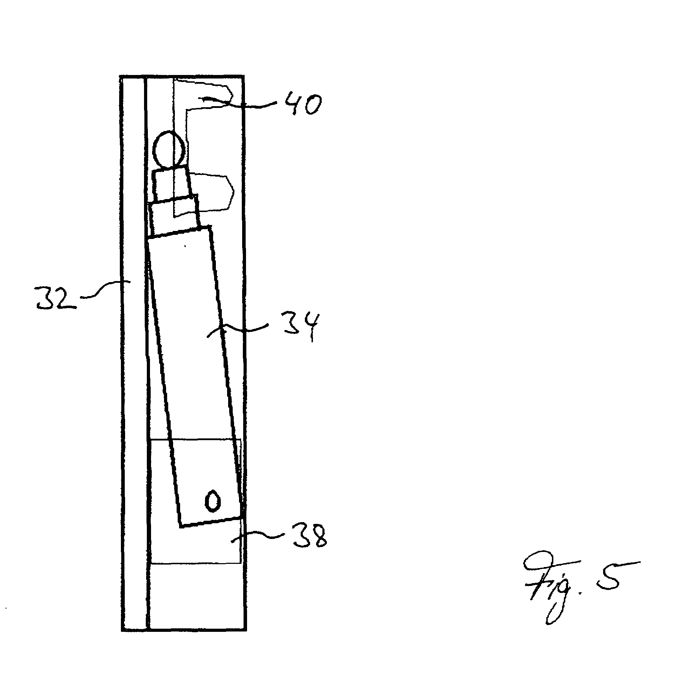

- Fig. 5: einen Halterahmen des Formwerkzeugs mit darin aufgenommenem Hilfswerkzeug.

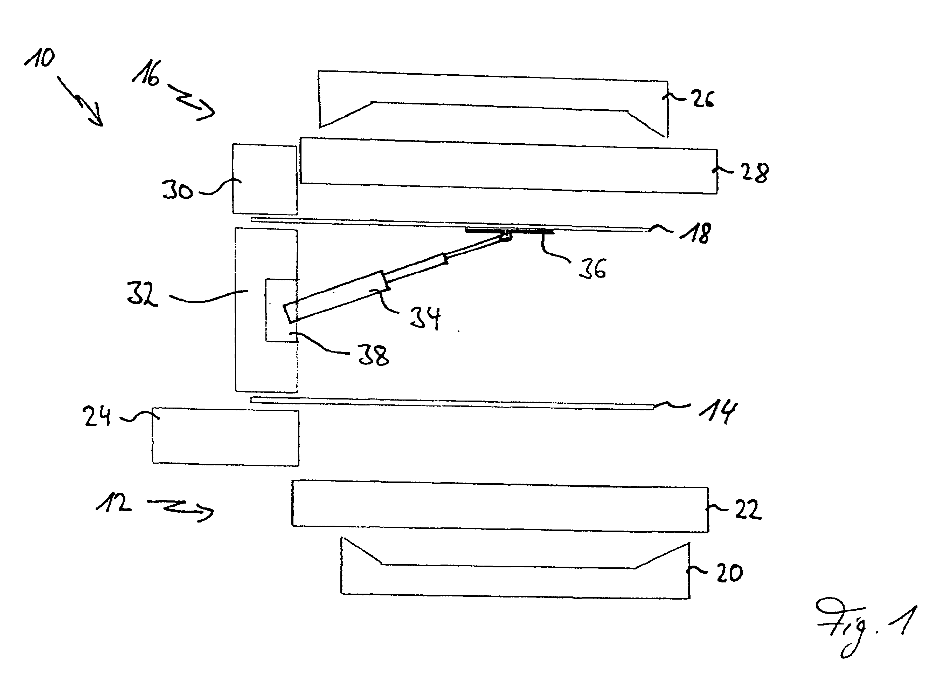

In Fig. 1 ist in stark schematisierter Weise eine Formvorrichtung 10 dargestellt, die eine Thermo- bzw. Vakuumformmaschine darstellt und mittels der nach einem so genannten Twin-Sheet-Verfahren ein zweischaliges Kunststoffteil hergestellt werden kann. Gegebenenfalls kann das zweischalige Kunststoffformteil ein Einsatzteil aufnehmen, das beispielsweise eine Funktionsgruppe bzw. Baugruppe darstellt und auch den von dem gebildeten Kunststoffformteil begrenzten Hohlraum vollständig ausf"ullen kann.

Die Formvorrichtung 10 umfasst eine untere Verformeinheit 12 zur Herstellung eines unteren Formteilelements aus einem unteren Thermoplastzuschnitt 14 und eine obere Verformeinheit 16 zur Herstellung eines oberen Formteilelements aus einem oberen Thermoplastzuschnitt 18. Die untere Verformeinheit 12 umfasst ein unteres Formwerkzeug 20, dessen Geometrie die Geometrie des aus dem unteren Thermoplastzuschnitt 14 hergestellten Formteilelements bzw. Verformlings vorgibt, eine untere Heizeinrichtung 22 zur Erweichung des unteren Thermoplastzuschnitts 14 sowie eine untere Haltevorrichtung 24 zur Fixierung bzw. Halterung des unteren Thermoplastzuschnitts 14 in der Formvorrichtung 10. Die obere Verforineinlieit 16, die oberhalb der unteren Verformeinheit 12 angeordnet ist, umfasst ein oberes Formwerkzeug 26, dessen Geometrie die Geometrie des aus dem Thermoplastzuschnitt 18 gefertigten Formteilelements bzw. Verformlings vorgibt, eine obere Heizeinrichtung 28 zur Erweichung des oberen Thermoplastzuschnitts 18 sowie eine als Spannrahmen ausgebildete obere Halteeinrichtung 30 für den oberen Thermoplastzuschnitt 18.

Des Weiteren umfasst die Formvorrichtung 10 einen Halterahmen 32, an dem ein Manipulator 34 schwenkbar gelagert ist. Der Manipulator 34 ist teleskopierbar und weist an seiner dem Halterahmen 32 abgewandten Ende ein Hilfswerkzeug 36 auf, das im in Fig. 1 dargestellten Anwendungsfall als Stütze für den oberen Thermoplastzuschnitt 18 dient und mithin eine Einlegehilfe darstellt.

Um den Manipulator 34 in einen zwischen der oberen Verformeinheit 16 und der unteren Verformeinheit 12 angeordneten Zwischenraum einfahren bzw. den Manipulator 34 aus diesem Zwischenraum ausfahren zu können, ist der Manipulator 34 mit einer Antriebseinrichtung 38 versehen, die einen elektrischen Stellmotor umfassen kann und die im Wesentlichen von dem Halterahmen 32 aufgenommen ist. Mittels der Antriebseimichtung 38, die mit einer nicht näher dargestellten Steuereinrichtung verbunden ist, ist der Manipulator 34 verschwenkbar und hinsichtlich seiner Länge einstellbar, das heißt teleskopierbar.

Die in der Zeichnung dargestellten Formvorrichtung 10 arbeitet in nachfolgend beschriebener Weise.

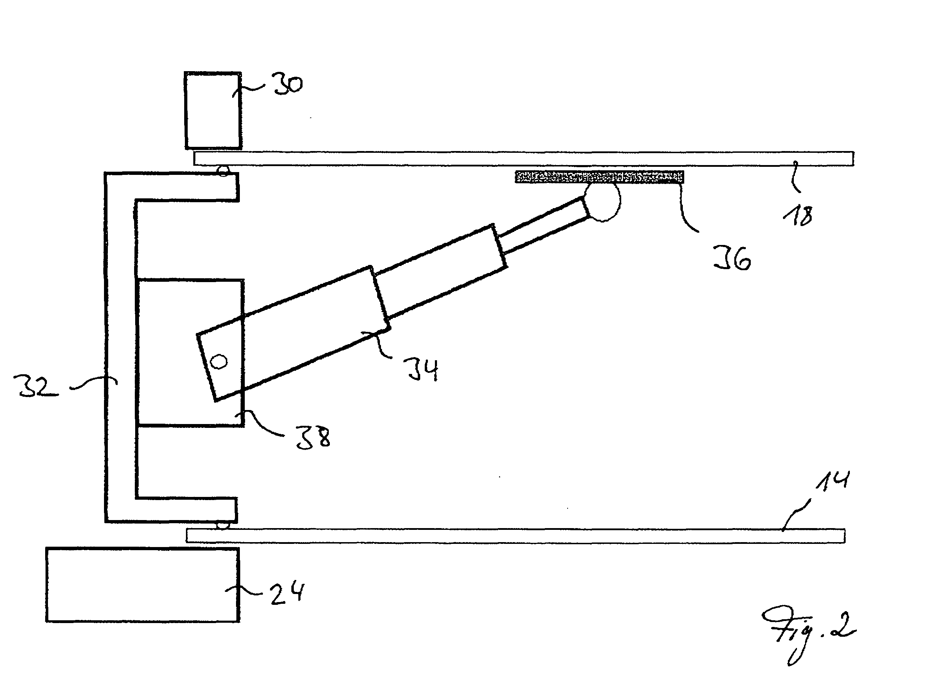

Ausgehend von einem auseinander gefahrenen Zustand der beiden Verformeinheiten 12 und 16 wird zunächst der Manipulator 34 mit seinem als plattenartige Stütze ausgebildeten Hilfswerkzeug 36 in die in den Figuren 1 und 2 dargestellte Position verfahren. Anschließend werden die Thermoplastzuschnitte 14 und 18 in die Formverrichtung 10 eingelegt. Hierbei stützt das Hilfswerkzeug 36 den oberen Thermoplastzuschnitt 18 mittig ab, so dass es dessen Durchbiegung entgegengewirkt. Damit wird verhindert, dass der obere Thermoptastzuschnitt 18 vor seinem Einspannen mittels der oberen Halteeinrichtung 30 aufgrund seiner Durchbiegung von seiner Lagerstelle im Randbereich nach unten durchrutscht (vgl. Figuren 1 und 2).

Anschließend werden die beiden Thermoplastzuschnitte 14 und 18 an den Halteeinrichtungen 24 und 30 eingespannt und damit fixiert. Der Manipulator 34 mit seinem Hilfswerkzeug 36 kann dann aus dem zwischen den Thermoplastzuschnitten 14 und 18 8 liegenden Zwischenraum ausgefahren werden.

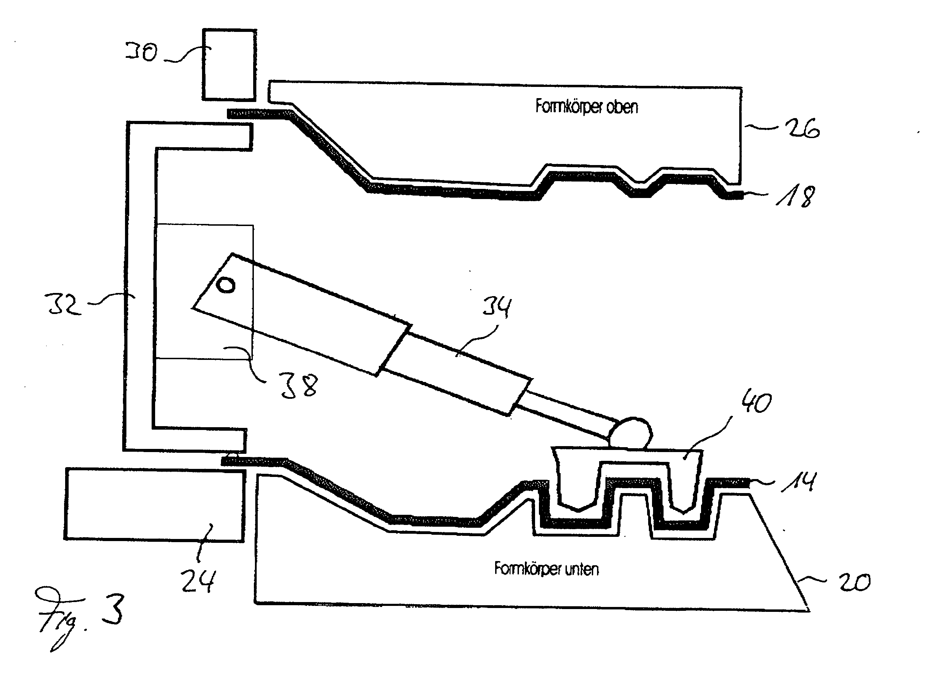

Nach dem Einspannen der beiden Thermoplastzuschnitte 14 und 18 werden diese mittels der von den Heizeinrichtungen 22 und 28 gebildeten Heizfelder aufgeheizt und erweicht. Anschließend werden die Formwerkzeuge 20 und 26 gegen den jeweiligen, erweichten Thermoplastzuschnitt 14 bzw. 28 gefahren, so dass unter Ausbildung eines Vakuums, das heißt nach einem Vakuumformverfahren aus dem jeweiligen Thermoplastzuschnitt 14 bzw. 18 ein unteres Formteilelement bzw. ein oberes Formteilelement ausgebildet wird, dessen Geometrie durch die Geometrie des jeweiligen Formwerkzeugs 20 bzw. 26 vorgegeben wird. Die Formgebung ist in Fig. 3 dargestellt. Wie ebenfalls Fig. 3 zu entnehmen ist, wird die Formgebung des unteren Thermoplastzuschnitts 14 durch ein als Formhilfe dienendes Hilfswerkzeug 40 unterstützt, das an dem teleskopierbaren Manipulator 34 angeordnet ist und von der dem Formwerkzeug 20 abgewandten Seite gegen den Thermoplastzuschnitt 14 drückt, um die Ausbildung von Sicken in dem Thermoplastzuschnitt 14 zu optimieren. Das Hilfswerkzeug 40 wird hierzu mittels der Antriebseinrichtung 38 des Manipulators 34 in die entsprechende Position verfahren. Bei entsprechender Auslegung könnte das Hilfswerkzeug 40 nicht nur an dem unteren Thermoplastzuschnitt 14, sondern auch an dem oberen Thermoplastzuschnitt 18 8 Formhilfe leisten.

Nach der Formgebung, das heißt nach der Fertigung der beiden Formteilelemente bzw. Verformlinge aus den beiden Thermoplastzuschnitten 14 und 18 wird der Manipulator 34 mit seinem Hilfswerkzeug 40 aus dem Zwischenraum zwischen den beiden Formwerkzeugen 20 und 28 gefahren, so dass er von einem von dem Halterahmen 32 gebildeten Aufnahmeraum 42 aufgenommen wird. Nach dem Zurückziehen des Manipulators 34 werden die Formwerkzeuge 20 und 26 mittels einer Verfahreinrichtung gegeneinander verfahren, so dass die noch aufgeweichten, aus den Thermoplastzuschnitten 14 und 18 gebildeten Formteilelemente miteinander verfügt bzw. verschweißt werden. Nach dem Abkühlen und Aushärten kann dann das aus dem oberen Formteilelement und dem unteren Fonnteilelement bestehende Kunststoffteil entformt werden.

### Bezugszeichenliste

- 10: Formvorrichtung
- 12: untere Verformeinheit
- 14: unterer Thermoplastzuschnitt
- 16: obere Verformeinheit
- 18: oberer Thermoplastzuschnitt
- 20: unteres Formwerkzeug
- 22: untere Heizeinrichtung
- 24: untere Halteeinrichtung
- 26: oberes Formwerkzeug
- 28: obere Heizeinrichtung
- 30: obere Halteeinrichtung
- 32: Halterahmen
- 34: Manipulator
- 36: Hilfswerkzeug
- 38: Antriebseinrichtung
- 40: Hilfswerkzeug

## Patentansprüche

1. Formvorrichtung zur Herstellung eines hohlen Kunststofffonn, teils aus mindestens einem Thermoplastzuschnitt (14, 18) nach einem Vakuumverforin-, Blasform- oder Thermofonnprozess, umfassend:
- eine erste Verformeinheit (12);
- eine zweite Verformeinheit (16), die gegenüberliegend der ersten Verformeinheit (12) angeordnet ist und zusammen mit der ersten Verformeinheit (12) zum Formen des mindestens einen Thermoplastzuschnitts zu dem hohlen Kunststoffforinteil dient; und
- eine Verfahreinrichtung, um die erste Verformeinheit (12) und die zweite Verformeinheit (16) relativ zueinander zu verfahren;
**gekennzeichnet durch** einen Manipulator (34), der in einen Zwischenraum zwischen der ersten Verfonneinheit (12) und der zweiten Verformeinheit (16) einfahrbar ist und aus diesem Zwischenraum ausfahrbar ist und der mindestens ein Hilfswerkzeug (36, 40) zum Abstützen und/oder Verformen des Thermoplastzuschnitts (14, 18) oder eines aus dem Thermoplastzuschnitt (14, 18) mittels einer der Verformeinheiten (12, 16) hergestellten Verformlings umfasst.

2. Formvorrichtung nach Anspruch 1, **dadurch gekennzeichnet, dass** das Hilfswerkzeug (40) einen Verformstempel umfasst.

3. Formvorrichtung nach Anspruch 1 oder 2, **dadurch gekennzeichnet, dass** das Hilfswerkzeug eine insbesondere plattenförmige Stützeinrichtung (36) für den Thermoplastzuschnitt (18) umfasst.

4. Formvorrichtung nach einem der Ansprüche 1 bis 3, **dadurch gekennzeichnet, dass** der Manipulator (34) eine Antriebseinrichtung (38) aufweist, deren Betätigung ein Verschwenken, ein translatorisches Verfahren und/oder ein Teleskopieren des Manipulators (34) auslöst.

5. Formvorrichtung nach einem der Ansprüche 1 bis 4, **dadurch gekennzeichnet, dass** der Manipulator (34) ein Halteelement für mindestens ein Einsatzteil des Kunststoffformteils umfasst.

6. Formvorrichtung nach einem der Ansprüche 1 bis 5, **dadurch gekennzeichnet, dass** die erste Verformeinheit (12) eine untere Verformeinheit zur Herstellung eines unteren Formteilelements aus einem unteren Thermoplastzuschnitt (14) ist, die ein unteres Formwerkzeug (20), eine untere Heizeinrichtung (22) und eine untere Halteeinrichtung (24) für den unteren Thennoplastzuschnitt (14) umfasst, und die zweite Verformeinheit (16) eine obere Verformeinheit (16) zur Herstellung eines oberen Formteilelements aus einem oberen Thermoplastzuschnitt (18) ist, die oberhalb der unteren Verformeinheit (12) angeordnet ist und ein oberes Formwerkzeug (26), eine obere Heizeinrichtung (28) und eine obere Halteeinrichtung (30) für den oberen Thermoplastzuschnitt (14) umfasst.

7. Formvorrichtung nach einem der Ansprüche 1 bis 6, **dadurch gekennzeichnet, dass** der Manipulator (34) an einem Halterahmen (32) gelagert ist, der zwischen der ersten Verformeinheit (12) und der zweiten Verformeinheit (16) angeordnet ist.

8. Formvorrichtung nach Anspruch 7, **dadurch gekennzeichnet, dass** der Halterahmen (32) einen Heizabschnitt umfasst, in dem ein Zwischenheizer für den oberen Thennoplastzuschnitt (14) und/oder für den unteren Thermoplastzuschnitt (18) angeordnet ist.

9. Formvorrichtung nach Anspruch 7 oder 8, **dadurch gekennzeichnet, dass** der Halterahmen höhenverstellbar ist.

10. Formvorrichtung nach einem der Ansprüche 7 bis 9, **dadurch gekennzeichnet, dass** der Halterahmen parallel zu seiner Ebene verfahrbar ist.

11. Verfahren zur Herstellung eines hohlen Kunststofffonnteils aus mindestens einem Thermoplastxuschnitt nach einem Vakuumverfonn-, Blasform- oder Thennoformprozess in einer Formvorrichtung, die eine erste Verformeinheit (12) und eine zweite Verformeinheit (16) umfasst, umfassend folgende Schritte:
- Beschicken der Formvorrichtung mit dem mindestens einem Thennoplastzuschnitt (14, 18);
- Einfahren eines Manipulators (34) in einen von dem mindestens einem Thermoplastzuschnitt (14, 18) gebildeten Zwischenraum, der zwischen den beiden Verfori-neiiiheiten (12, 16) liegt;
- Abstützen des Thermoplastzuschnitts (18) mittels eines Hilfswerkzeugs des Manipulators (34) und/oder Verformen des Thermoplastzuschnitts (14) mittels eines Hilfswerkzeugs (40) des Manipulators (34);
- Verformen des Thermoplastzuschnitts (14, 18) mittels der beiden Verformeinheiten (12, 16);
- Ausfahren des Manipulators (34) aus dem Zwischenraum; und
- Aneinanderfahren der beiden Verformeinheiten (12, 16) zur Ausformung des hohlen Kunststoffformteils.

12. Verfahren nach Anspruch 11, **dadurch gekennzeichnet, dass** ein erster Thermoplastzuschnitt (14) der ersten Verformeinheit (12) zugeordnet ist und ein zweiter Thermoplastzuschnitt (18) der zweiten Verformeinheit (16) zugeordnet ist und der Manipulator (34) zwischen den beiden Thermoplastzuschnitten (14, 18) zu deren Abstützen und/oder Verformen gefahren wird.

13. Verfahren nach Anspruch 11 oder 12, **dadurch gekennzeichnet, dass** die erste Verformeinheit (12) eine untere Verformeinheit ist und die zweite Verformeinheit (16) eine obere Verformeinheit ist und der der oberen Verformeinheit (16) zugeordnete Thermoplastzuschnitt (18) vor seinem Verformen mittels des Hilfswerkzeugs (36) des Manipulators (34) von unten gestützt wird.

14. Verfahren nach einem der Ansprüche 11 bis 13, **dadurch gekennzeichnet, dass** der Thermoplastzuschnitt (14) mittels des Hilfswerkzeugs (40) des Manipulators (34) von der einer zugeordneten Verformeinheit (12) abgewandten Seite eine Verformung erfährt und insbesondere Falten, die aus einer Formgebung mittels der betreffenden Verformeinheit (12) resultieren, ausgestrichen werden.
